# EUROPÄISCHE PATENTANMELDUNG

(11) **EP 4 602 908 A1**
(43) Veröffentlichungstag der Anmeldung: **20.08.2025**
(21) Anmeldenummer: 25152227.2
(22) Anmeldetag: 16.01.2025
(51) Int. Cl.: A01F 15/07

(54) **ZUFÜHRVORRICHTUNG ZUR ZUFÜHRUNG VON WICKELMATERIAL IN EINE PRESSKAMMER EINER RUNDBALLENPRESSE**

(30) Priorität: 15.02.2024 DE 102024104281
(71) Anmelder: Usines CLAAS France S.A.S, 57140 St. Rémy / Woippy (FR)
(72) Erfinder: Vagnier, Vincent, 55160 FRESNES EN WOEVRE (FR); Bare, Florent, 55150 Azannes (FR)
(74) Vertreter: CLAAS Gruppe

(57) **Zusammenfassung**

Die vorliegende Erfindung betrifft eine Zuführvorrichtung (1) zur Zuführung von Wickelmaterial in eine Presskammer (2) einer Rundballenpresse (3) gemäß dem Oberbegriff von Anspruch 1. Um eine Zuführvorrichtung (1) bereitzustellen, bei der die Nachteile aus dem Stand der Technik behoben sind und die eine Möglichkeit zur besonders einfachen und schnellen Fehlerbehebung aufweist, wird erfindungsgemäß mindestens eine Überführungseinrichtung (10) vorgeschlagen, das dazu vorgesehen und eingerichtet ist, bei einer Betätigung gleichzeitig
- das Sperrelement (6) in eine Wartungsstellung, in der eine Rotation der Zuführrolle (4) in eine der ersten Drehrichtung entgegengesetzte Drehrichtung freigegeben ist, und
- die Andrückrolle (7) in die Freistellung zu überführen.

Des Weiteren betrifft die Erfindung eine Rundballenpresse (3).

## Beschreibung

Die vorliegende Erfindung betrifft eine Zuführvorrichtung zum Abziehen von Wickelmaterial von einer Wickelrolle und zur Zuführung des Wickelmaterials in eine Presskammer einer Rundballenpresse gemäß dem Oberbegriff von Anspruch 1. Des Weiteren betrifft die Erfindung eine Rundballenpresse gemäß Anspruch 14.

Die Zuführvorrichtung weist mindestens eine Zuführrolle auf. Diese dient dazu, das kontrollierte Abziehen des Wickelmaterial von der Wickelrolle, die der Zuführvorrichtung vorgeschaltet ist und die das Wickel material gewickelt aufnimmt, zu unterstützen und der Presskammer der Rundballenpresse, in der der Rundballen geformt wurde, zuzuführen. Die Zuführrolle ist dabei in eine erste Drehrichtung rotierbar.

Des Weiteren weist die Zuführvorrichtung mindestens ein Sperrelement auf. Dieses wirkt mit der Zuführrolle zusammen und sperrt - sofern es in einer Sperrstellung vorliegt - eine Rotation der Zuführrolle in eine der ersten Drehrichtung entgegengesetzte Drehrichtung. Mit anderen Worten hemmt das Sperrelement eine Rotation der Zuführrolle, sodass diese, zumindest bei Vorliegen in des Sperrelements in der Sperrstellung, lediglich in eine Drehrichtung rotieren kann.

Der Zuführrolle zugeordnet ist weiterhin mindestens eine drehbar gelagerte Andrückrolle. Letztere ist zumindest zwischen einer Andrückstellung und einer Freistellung überführbar. Für den Fall, dass die Andrückrolle in der Andrückstellung vorliegt, ist diese dazu eingerichtet und vorgesehen, das Wickel material gegen die Zuführrolle zu pressen, während das Wickelmaterial in einem Führungsspalt führbar ist, der zwischen der Zuführrolle und der Andrückrolle ausgebildet ist. Auf diese Weise wird die Führung des Wickelmaterials ausgehend von der Wickelrolle zu der Presskammer ermöglicht, während eine sichere Führung des Wickelmaterials durch das Zusammenspiel der Zuführrolle und der Andrückrolle gewährleistet ist. Bei Vorliegen in der Freistellung ist die Andrückrolle hingegen wirkungslos.

In der Praxis hat es sich als nötig erwiesen, die Zuführrolle auch entgegen der ersten Drehrichtung rotieren zu können. Die Rotation der Zuführrolle in eine der ersten Drehrichtung entgegengesetzte Drehrichtung ist insbesondere dann wichtig, wenn es zu einem ungewollten Aufwickeln des Wickelmaterials auf die Zuführrolle gekommen ist. In diesem Fall muss das Wickelmaterial händisch mittels einer entgegengesetzten Rotation der Zuführrolle von derselben entfernt werden. In diesem Zusammenhang ist es mithin besonders wichtig, das Sperrelement in die Wartungsstellung überführen zu können, um die Rotation der Zuführrolle überhaupt erst freigeben zu können.

Auch kann sich Wickelmaterial infolge eines Abtrennens von der Wickelrolle aufgrund seiner elastischen Eigenschaften und der damit einhergehenden elastischen Streckung schlagartig zusammenziehen und hierbei aufgrund eines Reibschlusses mit der Zuführrolle eine Beschleunigung letzterer verursachen. Auf diese Weise wird das Wickelmaterial von der Zuführrolle abgewickelt und befindet sich nicht länger in Kontakt mit dieser. Eine erneute Zuführung des Wickelmaterials in den Führungsspalt muss in diesem Fall händisch erfolgen. In diesem Zusammenhang ist eine räumliche Entfernung der Andrückrolle von der Zuführrolle besonders von Vorteil, da hierdurch das Einfädeln des Wickelmaterials in den Führungsspalt erleichtert werden kann. Eine Überführung der Andrückrolle in ihre Freistellung ist mithin wünschenswert.

Zuführvorrichtungen der eingangs beschriebenen Art sind in einer Vielzahl aus dem Stand der Technik bekannt. So ist beispielsweise aus der deutschen Patentanmeldung DE 10 2004 001 773 A1 eine Zuführvorrichtung mit einer Zuführrolle und einer Andrückrolle bekannt. Die Zuführrolle ist mit einem Freilauf versehen, wodurch sich die Zuführrolle nur in eine Richtung drehen kann und eine Drehung in die andere Richtung blockiert ist. Die Andrückrolle ist dabei an einem Hebel gelagert, der um eine Achse schwenken kann. Eine Feder, die sich an einem Schutzblech der Zuführvorrichtung abstützt, drückt die Andrückrolle gegen die Zuführrolle, wodurch die Rollen fest aneinander anliegen und das Wickelmaterial sicher festgeklemmt werden kann.

Aus der DE 38 79 999 T2 ist ebenfalls eine Zuführvorrichtung mit einer Zuführrolle und einer Andrückrolle bekannt. Ein Endlagen-Gestänge ist für die Bedienungsperson an der Vorderseite der Rundballenpresse zugänglich und mit Schwenkarmen verbunden, um dessen Bewegung zu steuern. Eine Betätigung des Endlagen-Gestänges sorgt für eine Schwenkbewegung der entsprechenden Schwenkarme und eine resultierende Überführung der Andrückrolle ausgehend von der Freistellung in die Andrückstellung, in der die Andrückrolle mit der Zuführrolle in Eingriff kommt.

Auch aus der deutschen Patentanmeldung DE 10 2017 122 138 A1 ist eine Zuführvorrichtung mit einer Zuführrolle und einer Andrückrolle bekannt. Die Zuführvorrichtung umfasst dabei auch ein Sperrelement, das zwischen der Wartungsstellung und der Sperrstellung überführbar ist. Bei Vorliegen in der Wartungsstellung hat das Sperrelement keinen sperrenden Effekt auf die Zuführrolle, wodurch die Zuführrolle grundsätzlich frei ist, sich sowohl in die erste Drehrichtung als auch in eine entgegengesetzte Drehrichtung um ihre Rotationsachse drehen zu können. Bei Vorliegen des Sperrelements in seiner Sperrstellung bewirkt es zumindest eine solche Blockierung der Zuführrolle, dass eine Rotation derselben entgegen ihrer Drehrichtung verhindert ist. Weiterhin umfasst die Zuführvorrichtung eine Spanneinrichtung, die eine Überführung der Andrückrolle zwischen ihrer Freistellung und ihrer Andrückstellung bewerkstelligen kann.

Als nachteilig an den aus dem Stand der Technik bekannten Zuführvorrichtungen hat sich herausgestellt, dass oftmals jeweils ein zu betätigender Mechanismus vorgesehen ist, der ein Verlagern der Andrückrolle erlaubt, um das Wickel material zur Fehlerbehebung von der Zuführrolle abzuwickeln. Abgesehen von dem besonders unbequemen Charakter dieser Tätigkeit ist auch ein wirtschaftlicher Verlust infolge einer entsprechenden Stillstandzeit der jeweiligen Rundballenpresse zu beklagen. Sofern auch ein Mechanismus zum Freigeben der entgegengesetzten Drehrichtung vorgesehen ist, so ist dieser separat vom Mechanismus zum Verlagern der Andrückrolle ausgebildet, wodurch der Bediener verschiedene Betätigungen vornehmen muss und immer sicherstellen muss, dass alle Mechanismen wieder in ihre Ausgangslage verlagert werden.

Es ist somit Aufgabe der vorliegenden Erfindung, eine Zuführvorrichtung bereitzustellen, bei der die Nachteile aus dem Stand der Technik behoben sind und die eine Möglichkeit zur besonders einfachen und schnellen Fehlerbehebung aufweist.

Ausgehend von der eingangs beschriebenen Zuführvorrichtung wird die vorstehende Aufgabe durch mindestens eine Überführungseinrichtung gelöst, die dazu vorgesehen und eingerichtet ist, bei einer Betätigung zugleich ein Sperrelement in eine Wartungsstellung zu überführen, in der eine Rotation der Zuführrolle in eine der ersten Drehrichtung entgegengesetzte Richtung freigegeben ist, und eine Andrückrolle in eine Freistellung zu überführen. Mit anderen Worten ist nach Betätigen der Überführungseinrichtung die Andrückrolle wirkungslos, während zugleich die Zuführrolle frei drehbar ist.

Die erfindungsgemäße Zuführvorrichtung hat viele Vorteile. Insbesondere wird es ermöglicht, Wickelmaterial, welches sich in unbeabsichtigter Weise auf der Zuführrolle aufgewickelt hat, zu entfernen, da zum einen ein Zugang zu der Zuführrolle ermöglicht ist und zum anderen die Zuführrolle nunmehr auch frei, d.h. in beide Drehrichtungen, gedreht werden kann. Bei dem Wickelmaterial, das zur Umwicklung des Rundballens verwendet wird, kann es sich insbesondere um ein Netz oder eine Folie handeln. Vorzugsweise kann dabei vorgesehen sein, dass die Andrückrolle in ihrer Freistellung in einem Abstand von der Zuführrolle angeordnet ist, der vorzugsweise größer ist als der auszubildende Führungsspalt zwischen der Andrückrolle und der Zuführrolle, sodass letztere frei zugänglich ist. In der Freistellung der Andrückrolle hat diese vorzugsweise keinen Kontakt zu der Zuführolle und/oder dem Wickelmaterial. Gleichzeitig ist nach Überführen des Sperrelements in die Wartungsstellung und der Andrückrolle in die Freistellung auch ein erneutes Zuführen von Wickelmaterial für den Fall einer unbeabsichtigten Abwicklung zu der Zuführrolle ermöglicht.

Die zweite Drehrichtung ist vorzugsweise gegenläufig zur ersten Drehrichtung orientiert, sodass das Wickelmaterial im Zusammenspiel der Zuführrolle und der Andrückrolle geführt wird. In eine Bewegungsrichtung des Wickelmaterials betrachtet ist das Paar aus der Zuführrolle und der Andrückrolle der Wickelrolle nachgeordnet.

Es ist gemäß einer vorzugsweise Ausgestaltung der Erfindung vorgesehen, dass die Überführungseinrichtung dazu vorgesehen und eingerichtet ist, bei einer Betätigung zugleich das Sperrelement ausgehend von der Wartungsstellung in die Sperrstellung und die Andrückrolle ausgehend von der Freistellung in die Andrückstellung zu überführen. Mit anderen Worten ist das Betätigungselement dazu gedacht, das Sperrelement und die Andrückrolle mit nur einer Betätigung gleichzeitig in die jeweils andere, dem Bauteil zugehörige Stellung überführen zu können. Vorteilhafterweise wird einem Verwender der Zuführvorrichtung somit die Handhabung erleichtert. Insbesondere muss der Verwender nach einer erfolgten Fehlerbehebung die beiden Bauteile nicht händisch wieder in die entsprechenden, für den Betrieb der Rundballenpresse vorgesehenen Stellungen überführen. Vielmehr reicht hierbei vorteilhafterweise eine erneute Betätigung der Überführungseinrichtung aus.

Eine weitere vorzugsweise Ausgestaltung sieht vor, dass die Andrückrolle bei Vorliegen in der Andrückstellung mittelbar oder unmittelbar unter Federbelastung gegen die Zuführrolle gedrückt. Aufgrund der Federbelastung kann sichergestellt werden, dass sich die Andrückrolle in einem Ausgangszustand in der Andrückstellung befindet. Lediglich aus Gründen der Wartung oder zur Fehlerbehebung kann es vorgesehen sein, die Andrückrolle in die Freistellung zu überführen. Die Überführung muss dabei gegen die Federbelastung erfolgen. Auf diese Weise ist sichergestellt, dass die Überführung nicht unbeabsichtigt erfolgen kann.

In der Freistellung ist die Andrückrolle vorzugsweise in einem Abstand zu der Zuführrolle angeordnet. Auf diese Weise kann die Zuführrolle, insbesondere zu Zwecken der Wartung oder zur Entfernung von unbeabsichtigt um die Zuführrolle gewickeltem Wickelmaterial, händisch erreicht werden. Vorteilhafterweise wird auf diese Weise eine besonders sichere Funktionsweise der Zuführvorrichtung gewährleistet.

Gemäß einer weiteren vorzugsweisen Ausgestaltung der Erfindung ist vorgesehen, dass die Überführungseinrichtung mindestens einen Hebel und mindestens eine Verbindungseinrichtung aufweist, wobei eine Betätigung des Hebels über die Verbindungseinrichtung eine translatorische Bewegung der Andrückrolle hervorruft, sodass die Andrückrolle ausgehend von der Andrückstellung in ihre Freistellung überführbar ist. Dabei kann vorzugsweise vorgesehen sein, dass eine Rotationsbewegung des Hebels über eine Mehrzahl von Verbindungselementen der Verbindungseinrichtung in eine translatorische Bewegung umgewandelt wird. Beispielsweise kann die Verbindungseinrichtung zwei Verbindungselemente aufweisen, wobei eines der Verbindungselemente derart mit dem Hebel gekoppelt ist, dass die rotatorische Bewegung des Hebels eine rotatorische Bewegung des ersten Verbindungselements hervorruft. Ein zweites Verbindungselement kann vorzugsweise drehbar an dem ersten Verbindungselement gelagert sein, wobei vorgesehen sein kann, dass die rotatorische Bewegung des ersten Verbindungselements in eine translatorische Bewegung des zweiten Verbindungselements umgewandelt wird. Das zweite Verbindungselement ist vorzugsweise unmittelbar mit der Andrückrolle gekoppelt, sodass auch diese translatorisch verschiebbar ist. Auf diese Weise kann die Andrückrolle bei einer Betätigung des Hebels von der Zuführrolle entfernt werden. Zugleich kann vorgesehen sein, dass auch das Sperrelement mit dem zweiten Verbindungselement gekoppelt ist, sodass auch dieses translatorisch verschiebbar und auf diese Weise ausgehend von der Sperrstellung in die Wartungsstellung überführbar ist.

Gemäß einer weiteren vorzugsweisen Ausgestaltung ist vorgesehen, dass die Andrückrolle unter Betätigung des Hebels bei gleichbleibender Position der Zuführrolle, vorzugsweise entlang eines Langlochs einer Zuführeinrichtung der Zuführvorrichtung, bewegbar ist. Auf diese Weise kann sichergestellt werden, dass die Andrückrolle von der Zuführrolle entfernt wird, wenn der Hebel der Überführungseinrichtung betätigt wird.

Eine vorzugsweise Ausgestaltung der Erfindung sieht vor, dass die Zuführrolle mit einem Freilauf versehen ist. Mit anderen Worten kann sich die Zuführrolle lediglich in eine Drehrichtung frei drehen. Eine Rotation in eine entgegengesetzte Drehrichtung ist hingegen blockiert. Die Verwendung eines Freilaufs ist insbesondere im Hinblick auf ein Einführen von Wickelmaterial in den Führungsspalt zwischen der Zuführrolle und der Andrückrolle von Vorteil.

Eine weitere vorzugsweise Ausgestaltung der Erfindung sieht vor, dass die Zuführrolle ein Lagergehäuse aufweist, wobei das Lagergehäuse mit einem Sperrrad versehen ist, welches zusammen mit dem Sperrelement ein Drehgesperre ausbildet. Dabei kann vorgesehen sein, dass das Sperrrad eine Vielzahl entlang eines Umfangs des Sperrrads angeordneter Zähne aufweist. Das Sperrelement kann dabei zum Fixieren des Sperrrads in Zahnzwischenräume eingreifen. Weiterhin kann vorzugsweise vorgesehen sein, dass das Sperrelement mit einer Feder vorbelastet ist, die dafür sorgt, dass das Sperrelement zumindest bei Vorliegen in der Sperrstellung in die Zahnzwischenräume eingreift und auf diese Weise eine Rotation der Zuführrolle entgegen der ersten Drehrichtung verhindert. Dies kann insbesondere durch die Anordnung der Feder ermöglicht werden.

Gemäß einer vorzugsweisen Ausgestaltung ist vorgesehen, dass die Zuführrolle, die Andrückrolle, die Überführungseinrichtung, die Verbindungseinrichtung, das Lagergehäuse und/oder das Sperrelement an der gemeinsamen Zuführeinrichtung der Zuführvorrichtung gelagert ist bzw. sind. Vorzugsweise kann vorgesehen sein, dass die Zuführeinrichtung unbeweglich in der Zuführvorrichtung angeordnet ist, während zumindest ein Teil der vorgenannten Bauteile beweglich an der Zuführeinrichtung gelagert ist. So ist gemäß einer vorzugsweisen Ausgestaltung vorgesehen, dass zumindest die Verbindungseinrichtung, die Andrückrolle und/oder das Sperrelement relativ zu der Zuführeinrichtung bewegbar gelagert ist bzw. sind. Besonders bevorzugt ist jedoch, wenn die Zuführrolle mit ihrem Lagergehäuse unbeweglich an der Zuführeinrichtung gelagert ist, während die Andrückrolle, die Überführungseinrichtung, die Verbindungseinrichtung und das Sperrelement zumindest in Teilen relativ zu der Zuführeinrichtung bewegbar sind. Hierdurch kann insbesondere eine Relativbewegung der Andrückrolle zu der Zuführrolle bewirkt werden, die Andrückrolle also in ihre Freistellung überführt werden. Im gleichen Zug kann infolge einer Relativbewegung des Sperrelements zu der Zuführrolle das Sperrelement auf diese Weise in seine Wartungsstellung überführt werden, sodass die Zuführrolle frei rotieren kann.

Dabei sieht eine vorzugsweise Ausgestaltung der Erfindung vor, dass das Sperrelement in Kraft übertragender Weise mit der Andrückrolle, vorzugsweise mittels eines Kopplungselements, gekoppelt ist. Hierdurch kann eine Relativbewegung der Andrückrolle auf das Sperrelement oder andersherum übertragen werden. Das Kopplungselement kann dabei vorzugsweise in Form eines Stifts ausgebildet sein, der sich in Richtung einer Längsachse der Andrückrolle in Verlängerung letzterer erstreckt. Das Sperrelement ist vorzugsweise drehbar an dem Kopplungselement gelagert. Eine Drehachse des Sperrelements entspricht dabei vorzugsweise einer Längsachse der Andrückrolle.

Die eingangs genannte Aufgabe wird ferner durch eine landwirtschaftliche Rundballenpresse mit den Merkmalen gemäß dem Anspruch 14 gelöst. Die landwirtschaftliche Rundballenpresse zeichnet sich dabei durch eine erfindungsgemäße Zuführvorrichtung aus. Die in Bezug auf die Zuführvorrichtung genannten Vorteile und vorzugsweisen Ausgestaltungen gelten dabei analog für die landwirtschaftliche Rundballenpresse.

Die Erfindung ist nachstehend anhand eines Ausführungsbeispiels, das in den Figuren dargestellt ist, näher erläutert. Es zeigt:
- Fig. 1:: Einen Querschnitt durch eine Rundballenpresse gemäß dem Stand der Technik.
- Fig. 2:: Eine erfindungsgemäße Zuführvorrichtung in einer ersten Stellung.
- Fig. 3:: Eine weitere Ansicht der Zuführvorrichtung in der ersten Stellung.
- Fig. 4:: Die Zuführvorrichtung aus Figur 3 in einer Zwischenstellung.
- Fig. 5:: Die Zuführvorrichtung aus Figur 3 in einer zweiten Stellung.

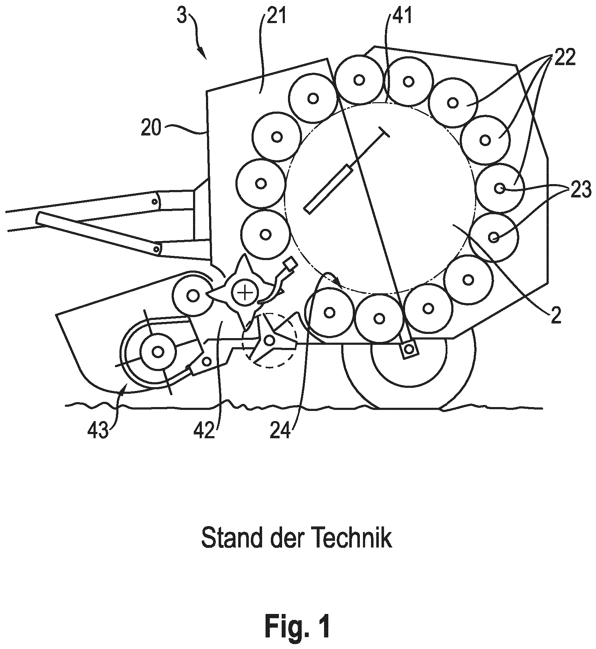

Eine Rundballenpresse **3** gemäß dem Stand der Technik ist in der **Figur 1** gezeigt. Der Rundballenpresse **3** wird nicht in den Figuren gezeigtes Wickelmaterial zugeführt, welches sodann um einen Rundballen **41,** der in einer Presskammer **2** gepresst wurde, gewickelt wird. Die Rundballenpresse **3** umfasst dabei ein Gehäuse **20,** das einen Innenraum **21** umschließt. In letzterem sind eine Vielzahl von Profilwalzen **22** angeordnet, welche jeweils um ihre Längsachse **23** rotatorisch antreibbar sind, sodass ein Erntegut, dass mittels einer Fördereinrichtung **43** über einen Förderkanal **42** in die Presskammer **2** gefördert wurde, sukzessive zu einem Rundballen **41** gepresst werden kann. Der Rundballen **41** nimmt am Ende des Pressvorgangs eine im Wesentlichen rotationssymmetrische Form an.

Um zu verhindern, dass die Form nach Auswurf des Rundballens **41** infolge eines Zerfalls verloren geht, wird der Rundballen **41** in aller Regel mit dem Wickelmaterial, beispielsweise einem Netz oder einer Folie, umwickelt. Hierzu weist die Rundballenpresse **3** eine Zuführvorrichtung **1** auf, die der Presskammer **2** das Wickelmaterial zuführt. Um den Rundballen **41** zum Umwickeln, wird das Wickelmaterial in einen Spalt **24** eingeführt, der sich zwischen einer äußeren Mantelfläche des Rundballens **41** und den Profilwalzen **22** einstellt. Infolge einer Rotation des Rundballens **41** wird eine vollständige Umwicklung des Rundballens **41** mit dem Wickelmaterial ermöglicht. Dabei ist es üblich, den Rundballen **41** mehrfach mit dem Wickelmaterial zu umwickeln.

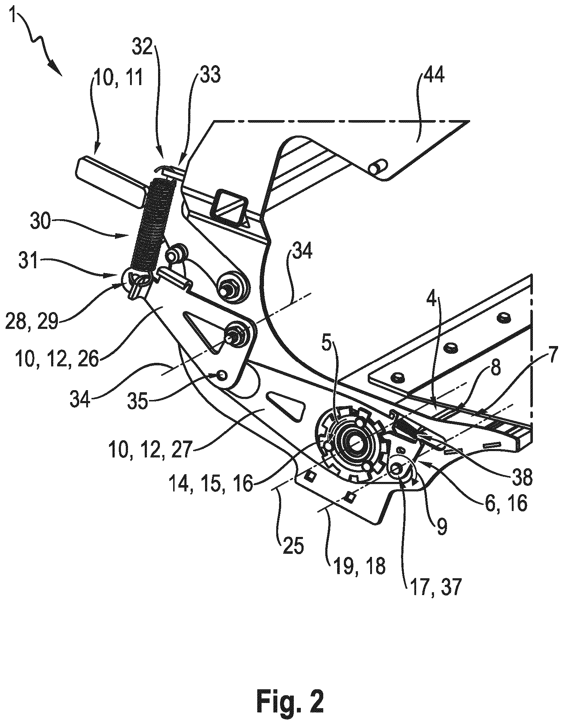

Eine erfindungsgemäße Zuführvorrichtung **1** ist im Detail in den **Figuren 2 bis 5** gezeigt. Der Zuführvorrichtung **1** vorgeschaltet ist eine nicht in den Figuren gezeigte Wickelrolle auf. Das Wickelmaterial wird dabei ausgehend von der Wickelrolle zu einer Zuführrolle **4** der Zuführvorrichtung **1** geleitet. Die Zuführrolle **4** ist rotatorisch antreibbar ausgebildet und in eine erste Drehrichtung **5** (in den **Figuren 2 bis 5** gegen den Uhrzeigersinn) drehbar. Die Zuführrolle **4** dient dazu, das Wickelmaterial von der Wickelrolle sukzessive abzuziehen und der Presskammer **2** zuzuführen.

Ferner weist die Zuführvorrichtung **1** eine der Zuführrolle **4** zugeordnete Andrückrolle **7** auf. Die Andrückrolle **7** ist mit ihrer Längsachse **19** parallel zu einer Längsachse **25** der Zuführrolle **4** angeordnet. Diese dient dazu, eine Kraftübertragung zwischen dem Wickelmaterial und der Zuführrolle **4** zu gewährleisten. Die Andrückrolle **7** ist dabei zwischen einer Andrückstellung und einer Freistellung überführbar. Bei Vorliegen in der Andrückstellung presst die Andrückrolle **7** das Wickelmaterial auf eine äußere Mantelfläche der Zuführrolle **4.** Dabei begrenzen die Zuführrolle **4** und die Andrückrolle **7** einen Führungsspalt **8,** in dem das Wickelmaterial führbar ist. Die Andrückrolle **7** ist in eine zweite Drehrichtung **9** (in den **Figuren 2 bis 5** im Uhrzeigersinn) rotatorisch antreibbar ausgebildet, wobei die zweite Drehrichtung **9** der ersten Drehrichtung **5** der Zuführrolle **4** genau entgegengesetzt ist.

Der Zuführvorrichtung **1** nachgeordnet ist ein nicht in den Figuren gezeigtes Schneidelement, welches zwischen einer Passivstellung und einer Aktivstellung überführbar ist. Bei Vorliegen in der Aktivstellung ist das Schneidelement dazu eingerichtet und vorgesehen, mit dem Wickelmaterial einzugreifen und dieses durchzuschneiden. Das Schneidelement liegt während des Wickelprozesses in der Passivstellung vor und wird insbesondere dann in die Aktivstellung überführt, wenn ein Wickelprozess beendet ist und das Wickelmaterial abgetrennt werden soll.

Die Zuführrolle **4** als auch die Andrückrolle **7** sind, wie insbesondere aus den **Figuren 2 bis 5** hervorgeht, an einer Zuführeinrichtung **44** der Zuführvorrichtung **1** gelagert. Weiterhin weist die Zuführvorrichtung **1** eine Überführungseinrichtung **10** auf. Die Überführungseinrichtung **10** weist einen Hebel **11** und eine mehrteilige Verbindungseinrichtung **12** auf. Die Verbindungseinrichtung **12** umfasst zwei Verbindungselemente **26, 27,** welche an der Zuführeinrichtung **44** der Zuführvorrichtung **1** gelagert sind. Ein erstes Verbindungselement **26** weist einen Ankerpunkt **28** in Form einer Öse **29** zur kraftübertragenden Verbindung mit einer ersten Feder **30** der Überführungseinrichtung **10** der Zuführvorrichtung **1** auf. Ein erster Endabschnitt **31** der ersten Feder **30** ist dabei in die Öse **29** eingefädelt. Ein zweiter Endabschnitt **32** der Feder ist in eine Öse **33** des Hebels **11** der Überführungseinrichtung **10,** welches ebenfalls drehbar an der Zuführeinrichtung **44** gelagert ist, eingefädelt.

Das erste Verbindungselement **26** ist drehbar um eine Drehachse **34** an der Zuführeinrichtung **44** gelagert. Weiterhin ist das erste Verbindungselement **26** in Kraft übertragender Weise mit dem zweiten Verbindungselement **27** verbunden, wobei die beiden Verbindungselemente **26, 27** in einem entsprechenden Verbindungsbereich **35** in einem Langloch **13** der Zuführeinrichtung **44** geführt sind. Das zweite Verbindungselement **27** ist translatorisch verschiebbar entlang des Langlochs **13** an der Zuführeinrichtung **44** gelagert. Dabei weist das zweite Verbindungselement **27** ebenfalls ein Langloch **36** auf.

Die Zuführrolle **4** weist ein Lagergehäuse **14** mit einem Freilauf auf, welches einseitig mit einem Sperrrad **15** versehen ist. Das Lagergehäuse **14** ist drehbeweglich mit der Zuführeinrichtung **44** gekoppelt. Die Andrückrolle **7** ist mittels eines Kopplungselements **17** in Form eines Stifts **37** mit dem zweiten Verbindungselement **27** in Kraft übertragender Weise verbunden. Ebenfalls mit dem zweiten Verbindungselement **27** im Bereich der vorgenannten Verbindung verbunden ist ein Sperrelement 6, welches hakenförmig ausgebildet ist. Das Sperrelement **6** ist dabei drehbar um das Kopplungselement **17** gelagert und mit einer zweiten Feder **38** vorgespannt. Eine Drehachse **18** des Sperrelements **6** entspricht dabei der Längsachse **19** der Andrückrolle **19.**

Das Sperrrad **15** des Lagergehäuses **14** der Zuführrolle **4** der Zuführvorrichtung **1** bildet zusammen mit dem Sperrelement **6** ein Drehgesperre **16** aus. Hierzu ist das Sperrrad **15** mit Zähnen **39** versehen. Bei einer Rotation der Zuführrolle **4** in die erste Drehrichtung **5** kann das Sperrelement **6** über die Zähne **39** gleiten. Dies ist dadurch ermöglicht, dass das Sperrelement **6** drehbar an dem zweiten Verbindungselement **27** gelagert ist. Dabei ist das Sperrelement **6** ebenfalls federbelastet, sodass das Sperrelement **6** nach Überstieg eines Zahns **39** in Zahnzwischenräume **40** bewegt wird. Eine Rotation der Zuführrolle **4** entgegen der ersten Drehrichtung **5** ist aufgrund der Vorspannung des Sperrelements **6** verhindert.

Bei einer Betätigung des Hebels **11** der Überführungseinrichtung **10** werden das Sperrelement **6** und die Andrückrolle **7** in ihren jeweiligen Stellungen verändert. In einer Ausgangslage der Zuführvorrichtung **1** liegt das Sperrelement 6 in der Sperrstellung vor, während die Andrückrolle **7** in der Andrückstellung vorliegt. Mit anderen Worten befindet sich die Andrückrolle **7** in unmittelbarer Nähe zur Zuführrolle **4.** Zugleich ist eine Rotation der Zuführrolle **4** entgegen der ersten Drehrichtung **5** blockiert. Die Ausgangslage stellt sich aufgrund der beiden Federbelastungen automatisch, d.h. ohne händisches Zutun, ein und wird zur Umwicklung des Rundballens eingesetzt.

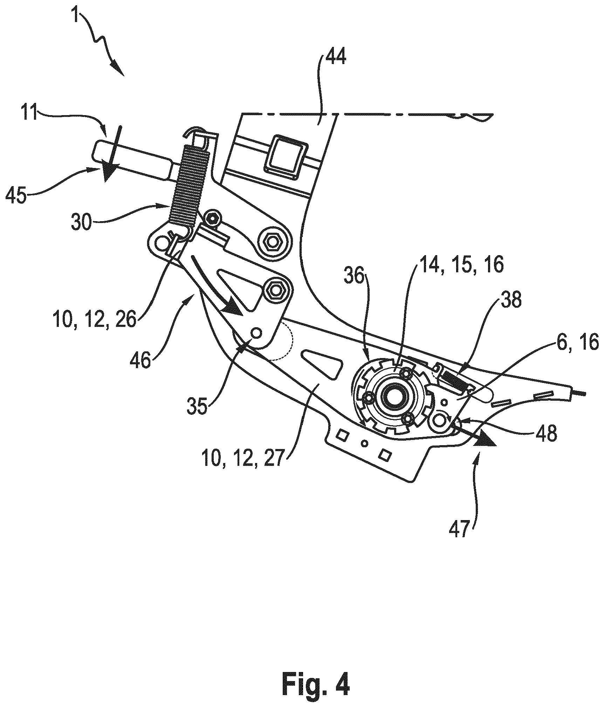

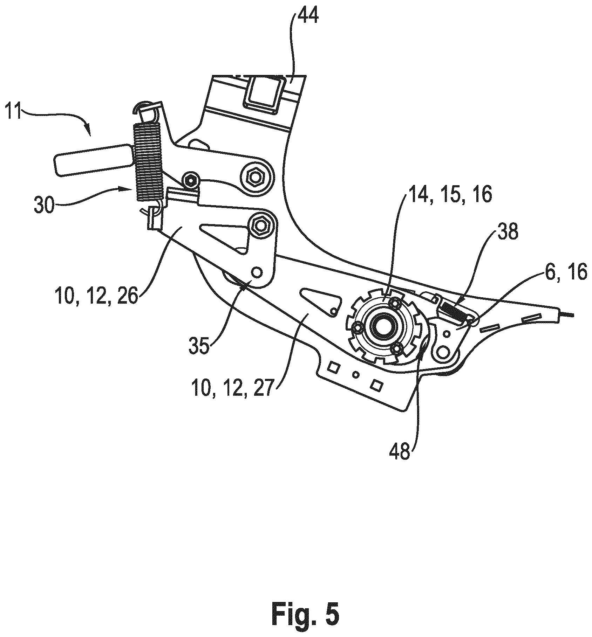

Bei Betätigung des Hebels **11** wird die erste Feder **30** der Überführungseinrichtung **10** gestaucht, wie in **Figur 4** durch den Pfeil **45** angedeutet ist. Als Folge wird das erste Verbindungselement **26** um die Drehachse **35** rotiert. Aufgrund der Verbindung mit dem zweiten Verbindungselement **27** wird das zweite Verbindungselement **27** translatorisch relativ zu der Zuführeinrichtung **44** verschoben, wie durch den Pfeil **46** angedeutet ist. Aufgrund der Verbindung des Sperrelements **6** mit dem Kopplungselement **17** und dem mit letzterem verbundenen zweiten Verbindungselement **27** wird das Sperrelement **6** translatorisch entlang eines in der Zuführeinrichtung **44** ausgebildeten Langlochs **48** bewegt, wie durch Pfeil **47** angedeutet, und in seine Wartungsstellung überführt, in der das Sperrelement **6** nicht länger mit den Zähnen des Sperrrads **15** in Kontakt kommt, wie in **Figur 5** erkennbar ist. Die translatorische Bewegung des zweiten Verbindungselements **27** relativ zu der Zuführrolle **4** ist dabei infolge des Langlochs **36** ermöglicht. Die Zuführrolle **4** verbleibt während der Überführung in ihrer Position.

Infolge der translatorischen Verschiebung der Andrückrolle **7** wird somit ein Spalt zwischen der Zuführrolle **4** und der Andrückrolle **7** ausgebildet, die Andrückrolle **7** und die Zuführrolle **4** sind mithin in einem Abstand zueinander angeordnet. Eine Blockade der Rotation der Zuführrolle **4** entgegen der ersten Drehrichtung ist ebenfalls aufgehoben. Somit lässt sich die Zuführrolle **4** in beide Richtungen rotieren.

Bei Vorliegen des Sperrelements **6** in der Wartungsstellung und gleichzeitigem Vorliegen der Andrückrolle **7** in der Freistellung kann Wickelmaterial von der Zuführrolle **4** entfernt werden. Auch kann Wickelmaterial in den ausgebildeten Spalt zwischen der Zuführrolle **4** und der Andrückrolle **7** eingeführt werden, sofern sich dieses aus dem Führungsspalt **8** gelöst haben sollte. Die Überführung der Stellungen kann mithin dann eingestellt werden, wenn eine Fehlerbehebung erfolgen soll.

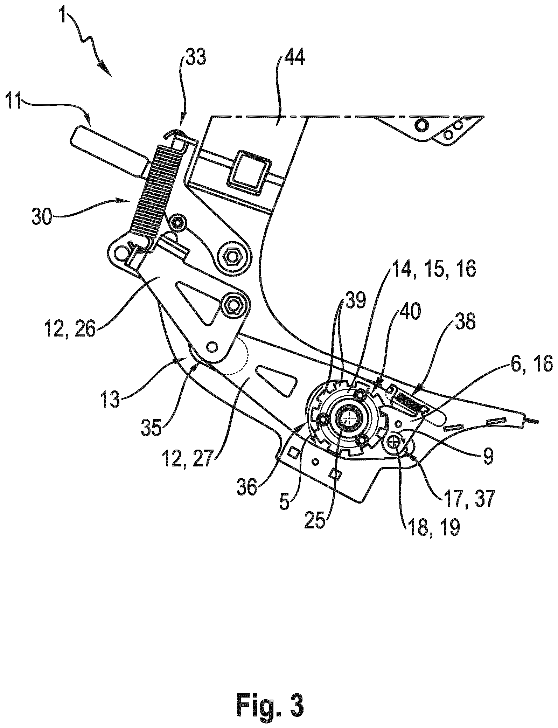

Nach beendeter Betätigung des Hebels **11** sorgt die erste Feder **30** für eine Überführung des Sperrelements **6** ausgehend von der Wartungsstellung zurück in die Sperrstellung bei gleichzeitiger Überführung der Andrückrolle **7** von der Freistellung in die Andrückstellung. Hierbei wird das zweite Verbindungselement **27** in die Ausgangsstellung, welche in den **Figuren 2** **und** **3** erkennbar ist, überführt, sodass das Sperrelement **6** erneut in die Zahnzwischenräume **40** eingreift und die Rotation der Zuführrolle **4** in die der ersten entgegengesetzten Drehrichtung **5** Drehrichtung verhindert. Zugleich wird die Andrückrolle **7** der Zuführrolle **4** angenähert.

### Bezugszeichenliste

- 1: Zuführvorrichtung
- 2: Presskammer
- 3: Rundballenpresse
- 4: Zuführrolle
- 5: erste Drehrichtung
- 6: Sperrelement
- 7: Andrückrolle
- 8: Führungsspalt
- 9: zweite Drehrichtung
- 10: Überführungseinrichtung
- 11: Hebel
- 12: Verbindungseinrichtung
- 13: Langloch
- 14: Lagergehäuse
- 15: Sperrrad
- 16: Drehgesperre
- 17: Kopplungselement
- 18: Drehachse des Sperrelements
- 19: Längsachse der Andrückrolle
- 20: Gehäuse
- 21: Innenraum
- 22: Profilwalze
- 23: Längsachse der Profilwalze
- 24: Spalt
- 25: Längsachse der Zuführrolle
- 26: erstes Verbindungselement
- 27: zweites Verbindungselement
- 28: Ankerpunkt
- 29: Öse
- 30: erste Feder
- 31: erster Endabschnitt der ersten Feder
- 32: zweiter Endabschnitt der ersten Feder
- 33: Öse des Hebels
- 34: Drehpunkt
- 35: Verbindungsbereich
- 36: Langloch des zweiten Verbindungselements
- 37: Stift
- 38: zweite Feder
- 39: Zahn
- 40: Zahnzwischenraum
- 41: Rundballen
- 42: Förderkanal
- 43: Fördereinrichtung
- 44: Zuführeinrichtung
- 45: Pfeil
- 46: Pfeil
- 47: Pfeil
- 48: Langloch

## Patentansprüche

1. Zuführvorrichtung (1) zum Abziehen von Wickelmaterial von einer Wickelrolle und zur Zuführung des Wickelmaterials in eine Presskammer (2) einer Rundballenpresse (3), umfassend
- mindestens eine Zuführrolle (4) zum Unterstützen des Abziehens des Wickelmaterials von der Wickelrolle und Zuführen des Wickelmaterials zu der Presskammer (2) der Rundballenpresse (3), wobei die Zuführrolle (4) in eine erste Drehrichtung (5) rotierbar ist,
- mindestens ein mit der der Zuführrolle (4) zusammenwirkendes Sperrelement (6), das bei Vorliegen in einer Sperrstellung eine Rotation der Zuführrolle (4) in eine der ersten Drehrichtung (5) entgegengesetzte Drehrichtung sperrt,
- mindestens eine der Zuführrolle (4) zugeordnete Andrückrolle (7),
wobei die Andrückrolle (7) zumindest zwischen einer Andrückstellung und einer Freistellung überführbar ist, wobei die Andrückrolle (7) bei Vorliegen in der Andrückstellung dazu eingerichtet und vorgesehen ist, das Wickelmaterial gegen die Zuführrolle (4) zu pressen, während das Wickelmaterial in einem zwischen der Zuführrolle (4) und Andrückrolle (7) ausgebildeten Führungsspalt (8) führbar ist, und bei Vorliegen in der Freistellung wirkungslos ist,
- wobei die Andrückrolle (7) drehbar gelagert ist,
**gekennzeichnet durch**
- mindestens eine Überführungseinrichtung (10), die dazu vorgesehen und eingerichtet ist, bei einer Betätigung gleichzeitig
▪ das Sperrelement (6) in eine Wartungsstellung, in der eine Rotation der Zuführrolle (4) in eine der ersten Drehrichtung entgegengesetzte Drehrichtung freigegeben ist, und
▪ die Andrückrolle (7) in die Freistellung zu überführen.

2. Zuführvorrichtung (1) nach Anspruch 1, **dadurch gekennzeichnet, dass** die Überführungseinrichtung (10) dazu vorgesehen und eingerichtet ist, bei einer Betätigung zugleich das Sperrelement (6) ausgehend von der Wartungsstellung in die Sperrstellung und die Andrückrolle ausgehend von der Freistellung in die Andrückstellung zu überführen.

3. Zuführvorrichtung (1) nach Anspruch 1 oder 2, **dadurch gekennzeichnet, dass** die Andrückrolle (7) bei Vorliegen in der Andrückstellung mittelbar oder unmittelbar unter Federbelastung gegen die Zuführrolle (4) gedrückt ist.

4. Zuführvorrichtung (1) nach einem der vorhergehenden Ansprüche, **dadurch gekennzeichnet, dass** die Andrückrolle (7) bei Vorliegen in der Freistellung in einem Abstand von der Zuführrolle (4) angeordnet ist.

5. Zuführvorrichtung (1) nach einem der vorhergehenden Ansprüche, **dadurch gekennzeichnet, dass** die Überführungseinrichtung (10) mindestens einen Hebel (11) und mindestens eine Verbindungseinrichtung (12) aufweist, wobei eine Betätigung des Hebels (11) über die Verbindungseinrichtung (12) eine translatorische Bewegung der Andrückrolle (7) hervorruft, sodass die Andrückrolle (7) ausgehend von der Andrückstellung in ihre Freistellung überführbar ist.

6. Zuführvorrichtung (1) nach Anspruch 5, **dadurch gekennzeichnet, dass** die Betätigung des Hebels (11) auch eine translatorische Bewegung des Sperrelements (6) hervorruft.

7. Zuführvorrichtung (1) nach Anspruch 5 oder 6, **dadurch gekennzeichnet, dass** die Andrückrolle (7) unter Betätigung des Hebels (11) bei gleichbleibender Position der Zuführrolle (4), vorzugsweise entlang eines Langlochs (48) einer Zuführeinrichtung (44) der Zuführvorrichtung (1), bewegbar ist.

8. Zuführvorrichtung (1) nach einem der vorhergehenden Ansprüche, **dadurch gekennzeichnet, dass** die Zuführrolle (4) mit einem Freilauf versehen ist.

9. Zuführvorrichtung (1) nach einem der vorhergehenden Ansprüche, **dadurch gekennzeichnet, dass** die Zuführrolle (4) ein Lagergehäuse (14) aufweist, wobei das Lagergehäuse (14) mit einem Sperrrad (15) versehen ist, welches zusammen mit dem Sperrelement (6) ein Drehgesperre (16) ausbildet.

10. Zuführvorrichtung (1) nach Anspruch 9, **dadurch gekennzeichnet, dass** das Sperrelement (6) unter Federbelastung mit dem Sperrrad (15) zusammenwirkt.

11. Zuführvorrichtung (1) nach Anspruch 9 oder 10, **dadurch gekennzeichnet, dass** die Zuführrolle (4), die Andrückrolle (7), die Überführungseinrichtung (10), die Verbindungseinrichtung (12), das Lagergehäuse (14) und/oder das Sperrelement (6) an der Zuführeinrichtung (44) der Zuführvorrichtung (1) gelagert ist bzw. sind.

12. Zuführvorrichtung (1) nach Anspruch 11, **dadurch gekennzeichnet, dass** zumindest die Verbindungseinrichtung (12), die Andrückrolle (7) und/oder das Sperrelement (6) relativ zu der Zuführeinrichtung (44) bewegbar gelagert ist bzw. sind.

13. Zuführvorrichtung (1) nach einem der vorhergehenden Ansprüche, **dadurch gekennzeichnet, dass** das Sperrelement (6) in Kraft übertragender Weise mit der Andrückrolle (7), vorzugsweise mittels eines Kopplungselements (17), gekoppelt ist.

14. Zuführvorrichtung (1) nach einem der vorhergehenden Ansprüche, **dadurch gekennzeichnet, dass** das Sperrelement (6) drehbar gelagert ist, wobei vorzugsweise eine Drehachse des Sperrelements (6) einer Längsachse (19) der Andrückrolle (7) entspricht

15. Rundballenpresse (3), **gekennzeichnet durch** mindestens eine Zuführvorrichtung (1) nach einem der vorhergehenden Ansprüche.
